# FASCICULE DE BREVET EUROPEEN

(11) **EP 3 890 165 B1**
(45) Date de publication et mention de la délivrance du brevet: **31.01.2024**
(21) Numéro de dépôt: 21165502.2
(22) Date de dépôt: 29.03.2021
(51) Int. Cl.: H02K 7/106, H02K 49/10

(54) **DISPOSITIF DE FREINAGE MAGNETIQUE POUR MOTEUR SYNCHRONE SANS BALAIS**
MAGNETBREMSEINRICHTUNG FÜR BÜRSTENLOSEN SYNCHRONMOTOR
MAGNETIC BRAKING DEVICE FOR BRUSHLESS SYNCHRONOUS MOTOR

(30) Priorité: 02.04.2020 FR 2003297
(43) Date de publication de la demande: 06.10.2021
(73) Titulaire: Delta Dore, 35270 Bonnemain (FR)
(72) Inventeur: SCHRAEN, Maxime, 35270 Bonnemain (FR); DUFFE, Julien, 35270 Bonnemain (FR); HANSEN, Gilles, 35270 Bonnemain (FR)
(74) Mandataire: Cabinet Le Guen Maillet

(56) Documents cités:
- EP-A2- 2 393 187
- EP-B1- 2 393 187
- FR-A1- 3 031 248
- US-A1- 2006 108 886

## Description

### DOMAINE TECHNIQUE

La présente invention concerne un dispositif de freinage magnétique destiné à freiner un moteur synchrone sans balais. La présente invention concerne plus particulièrement une bague de freinage disposée autour d'un rotor dudit moteur synchrone sans balais.

### ETAT DE LA TECHNIQUE ANTERIEURE

Un moteur synchrone sans balais permet de transformer une énergie électrique en énergie mécanique en utilisant un couplage magnétique entre des bobinages d'un stator et un aimant permanent d'un rotor. En effet, lorsque les bobinages du stator sont alimentés électriquement, ils génèrent un champ magnétique induit. Avec une alimentation électrique spécifique, il est possible de générer un champ magnétique induit tournant qui entraîne alors, par couplage magnétique avec l'aimant permanent du rotor, une rotation dudit rotor. Lorsque l'alimentation électrique des bobinages du stator est coupée, le champ magnétique induit disparaît et la rotation du rotor s'arrête. Toutefois, la rotation du rotor ne s'arrête pas immédiatement en raison de l'inertie du rotor. Or, il est parfois nécessaire de contrôler l'arrêt de la rotation du rotor et notamment d'accélérer l'arrêt du rotor lorsque les bobinages du stator ne sont plus alimentés électriquement. Il peut être en outre nécessaire d'assurer un maintien du rotor dans une position fixe lorsque le rotor est arrêté.

Il existe des systèmes de freinage qui font appel à un frein magnétique pour faciliter l'arrêt du rotor et maintenir ledit rotor en position fixe. Toutefois, de tels systèmes de freinage peuvent générer des vibrations mécaniques dues à un mouvement axial du rotor, voire des phénomènes de percussion. De tels effets vibratoires mécaniques génèrent du bruit et peuvent en outre endommager des roulements permettant la rotation du rotor.

Il est alors souhaitable de pallier ces inconvénients de l'état de la technique. Il est notamment souhaitable de fournir une solution qui permette d'assurer un freinage du rotor et son maintien dans une position fixe tout en empêchant la génération de bruit. Il est en outre souhaitable de fournir une solution qui empêche un endommagement du rotor, et notamment des roulements, et permette d'allonger la durée de vie du moteur.

FR 3 031 248 et EP 2 393 187 décrivent un dispositif de freinage magnétique d'un moteur synchrone où le rotor et le stator comportent une zone moteur et une zone de freinage, où la zone de freinage est positionnée sur une des extrémités axiales du rotor.

### EXPOSE DE L'INVENTION

Un objet de la présente invention est de proposer un dispositif de freinage magnétique d'un moteur synchrone sans balais selon la revendication 1, le moteur synchrone sans balais comportant un rotor et un stator, le stator comportant des bobinages et le rotor comportant une zone moteur, une alimentation électrique des bobinages pouvant entraîner une rotation du rotor par couplage magnétique avec la zone moteur. Le dispositif de freinage magnétique comporte : une zone de freinage disposée au niveau du rotor dans le prolongement de la zone moteur et comportant au moins un aimant permanent, et une bague de freinage comportant au moins un aimant permanent. Une force de freinage sur le rotor est générée par couplage magnétique entre le au moins un aimant permanent de la bague de freinage et le au moins un aimant permanent de la zone de freinage lorsque les bobinages du stator ne sont pas alimentés électriquement. La bague de freinage est positionnée autour d'au moins une partie de la zone de freinage et positionnée en retrait par rapport au bord latéral de la zone de freinage le plus éloigné de la zone moteur, le bord latéral de la bague de freinage le plus éloigné de la zone moteur étant séparé du bord latéral de la zone de freinage le plus éloigné de la zone moteur par un écart prédéfini, l'écart prédéfini correspondant à une distance pour laquelle un effort axial maximal appliqué sur le rotor lors d'une rotation complète dudit rotor est inférieur à un seuil prédéfini.

Ainsi, la génération de bruit lors de la rotation du rotor est réduite et l'endommagement des roulements du rotor est limité.

Selon un mode de réalisation particulier, la bague de freinage comporte en outre des dents positionnées sur le bord latéral de la bague de freinage le plus éloigné de la zone moteur, les dents ayant une longueur égale à l'écart prédéfini.

Ainsi, le positionnement de la bague de freinage est facilité.

L'invention concerne également un moteur synchrone sans balais comportant le dispositif de freinage magnétique mentionné ci-dessus.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement en coupe un moteur synchrone sans balais comportant un dispositif de freinage magnétique selon un premier mode de réalisation ;
[Fig. 2] illustre schématiquement en vue de côté un rotor du moteur synchrone sans balais et une bague de freinage du dispositif de freinage magnétique ;
[Fig. 3] illustre schématiquement en vue de face le moteur synchrone sans balais comportant le dispositif de freinage magnétique selon un premier mode de réalisation ;
[Fig. 4] illustre schématiquement en vue de face le moteur synchrone sans balais comportant le dispositif de freinage magnétique selon un second mode de réalisation.

### EXPOSE DETAILLE DE MODES DE REALISATION

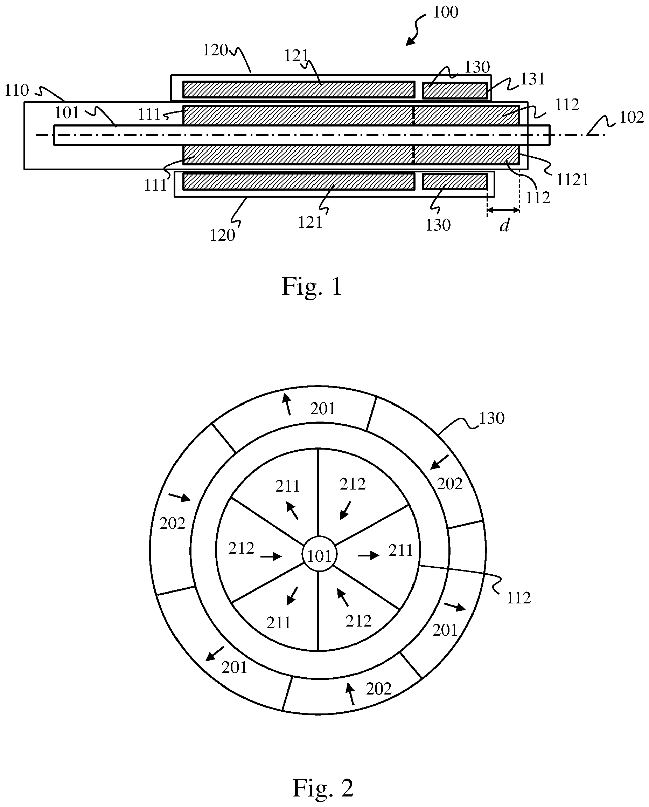

La **Fig. 1** illustre ainsi schématiquement en coupe un moteur synchrone 100 sans balais comportant un dispositif de freinage magnétique.

Le moteur synchrone 100 sans balais comporte un rotor 110 cylindrique pouvant entrer en rotation autour d'un axe de rotation 102. Le moteur synchrone 100 sans balais comporte en outre un stator 120 fixe.

Le rotor 110 comporte un arbre 101, une zone moteur 111 comportant au moins un aimant permanent et une zone de freinage 112. La zone moteur 111 est la partie du rotor 110 permettant la rotation du rotor 110. Le stator 120 comporte des bobinages 121 qui, lorsqu'ils sont alimentés électriquement, génèrent un champ magnétique induit pouvant entraîner, par couplage magnétique entre ledit champ magnétique induit et le au moins un aimant permanent de la zone moteur 111, une rotation du rotor 110. Dans un mode de fonctionnement moteur, l'alimentation électrique des bobinages 121 du stator 120 tient compte de la position du rotor 110 en temps réel de sorte à maintenir les flux magnétiques du rotor 110 et du stator 120 en quadrature de phase et ainsi à entretenir la rotation du rotor 110.

Le moteur synchrone 100 sans balais comporte en outre un dispositif de freinage magnétique. Le dispositif de freinage magnétique comporte une bague de freinage 130 disposée au niveau du stator 120 et la zone de freinage 112 disposée au niveau du rotor 110. La zone de freinage 112 est située dans le prolongement de la zone moteur 111 du rotor 110 et comporte, similairement à la zone moteur 111, au moins un aimant permanent. Selon un mode de réalisation, la zone moteur 111 et la zone de freinage 112 du rotor 110 ont des structures magnétiques identiques et s'étendent selon la direction de l'axe de rotation 102. Selon un mode de réalisation alternatif, la structure magnétique de la zone moteur 111 est différente de la structure magnétique de la zone de freinage 112, et comporte par exemple un concentrateur de flux magnétique qui est limité par une séparation entre la zone moteur 111 et la zone de freinage 112.

La bague de freinage 130 du dispositif de freinage magnétique est en forme d'anneau, centrée sur l'axe de rotation 102 du rotor 110, et disposée autour d'au moins une partie de la zone de freinage 112. La bague de freinage 130 comporte, similairement à la zone de freinage 112, au moins un aimant permanent.

Selon la présente invention, la bague de freinage 130 est en retrait par rapport au bord latéral 1121 de la zone de freinage 112 le plus éloigné de la zone moteur 111, selon la direction l'axe de rotation 102. Autrement dit, un écart prédéfini *d*, défini parallèlement à l'axe de rotation 102, sépare le bord latéral 131 de la bague de freinage 130 le plus éloigné de la zone moteur 111 du bord latéral 1121 de la zone de freinage 112 le plus éloigné de la zone moteur 111.

L'écart prédéfini *d* correspond à une distance pour laquelle un effort axial maximal pouvant être appliqué sur le rotor 110 lors d'une rotation complète dudit rotor 110 est inférieur à un seuil prédéfini. L'écart prédéfini *d* a une fonction de minimisation de l'effort axial appliqué sur le rotor 110 lors d'une rotation complète dudit rotor 110. Ainsi, la position de la bague de freinage 130 par rapport à la zone de freinage 112 a pour avantage de réduire les vibrations et le bruit généré lors de la rotation du rotor 110.

Dans un mode de réalisation particulier, le seuil prédéfini correspond à un effort axial maximal de 0,2 N ou de 0,1 N.

Par exemple, pour un rotor 110 de 55,5 mm de longueur et ayant un aimant de Br 0,3 T avec un flux magnétique de 2600 µWb, l'écart prédéfini *d* est compris entre 1,5 et 4 mm. Selon un autre exemple, pour un rotor 110 de 55,5 mm de longueur et ayant un aimant de Br 1,1 T avec un flux magnétique de 9600 µWb, l'écart prédéfini *d* est compris entre 4 et 7 mm. Selon un troisième exemple, pour un rotor 110 de 85,5 mm de longueur et ayant un aimant de Br 1,1 T avec un flux magnétique de 9600 µWb, l'écart prédéfini *d* est compris entre 3 et 7 mm.

La Fig. 2 illustre schématiquement en vue de côté le rotor 110, et plus particulièrement la zone de freinage 112, et la bague de freinage 130 du dispositif de freinage magnétique selon un mode de réalisation particulier. La vue de côté correspond à l'extrémité du moteur synchrone 100 sans balais où se trouvent les bords latéraux 1121 et 131 respectifs de la zone de freinage 112 et de la bague de freinage 130.

La zone de freinage 112 comporte des zones magnétiques 211, 212 réparties autour de l'arbre 101 et présentant une alternance entre des sens de polarisation opposés. Chaque zone magnétique 211 est polarisée dans un premier sens, par exemple dans une direction radiale avec un sens orienté vers l'extérieur du rotor 110, et chaque zone magnétique 212 est polarisée dans un second sens opposé au premier sens, par exemple dans une direction radiale avec un sens orienté vers l'intérieur du rotor 110.

La bague de freinage 130 comporte autant de zones magnétiques 201, 202 que la zone de freinage 112. Les zones magnétiques 201, 202 de la bague de freinage 130 ont une répartition angulaire autour de l'arbre 101 qui est identique à la répartition angulaire des zones magnétiques 211, 212 de la zone de freinage.

Similairement à la zone de freinage 112, chaque zone magnétique 201 (respectivement 202) de la bague de freinage a un sens de polarisation opposé au sens de polarisation des zones magnétiques adjacentes 202 (respectivement 201). Par exemple, chaque zone magnétique 201 de la bague de freinage 130 est polarisée dans le premier sens et chaque zone magnétique 202 de la bague de freinage 130 est polarisée dans le second sens.

Lors de la rotation du rotor 110, les zones magnétiques 201 (respectivement 202) de la bague de freinage 130 polarisées dans le premier sens se retrouvent en alternance face à des zones magnétiques 211 (respectivement 212) de la zone de freinage 112 polarisées dans le premier sens et face à des zones magnétiques 212 (respectivement 211) de la zone de freinage polarisées dans le second sens, opposé au premier sens.

Lorsque les zones magnétiques 201 (respectivement 202) de la bague de freinage 130 se retrouvent face à des zones magnétiques 211 (respectivement 212) de la zone de freinage 112 polarisées dans le même sens, le rotor 110 est dans une position d'équilibre stable en raison d'une attraction magnétique entre la bague de freinage 130 et la zone de freinage 112. La bague de freinage 130 applique un couple nul sur le rotor 110. Lorsque le rotor 110 tourne de sorte à se décaler légèrement de ladite position d'équilibre stable, la bague de freinage 130 applique alors un couple non nul sur le rotor 110 qui tend à ramener le rotor 110 vers sa position d'équilibre stable.

Lorsque les zones magnétiques 201 (respectivement 202) de la bague de freinage 130 se retrouvent face à des zones magnétiques 212 (respectivement 211) de la zone de freinage 112 polarisées en sens opposé, le rotor 110 est dans une position d'équilibre instable en raison d'une répulsion magnétique entre la bague de freinage 130 et la zone de freinage 112. La bague de freinage 130 applique un couple nul sur le rotor 110. Lorsque le rotor 110 se décale légèrement de ladite position d'équilibre instable, la bague de freinage 130 applique un couple non nul qui tend à éloigner le rotor 110 de ladite position d'équilibre instable pour le ramener vers la position d'équilibre stable la plus proche. Ainsi, lorsque le rotor 110 tourne, le couple généré par la bague de freinage 130 s'applique d'abord dans un sens, entre une position d'équilibre stable et une position d'équilibre instable, puis dans un autre sens opposé, entre ladite position d'équilibre instable et une position d'équilibre stable suivante. Le couple généré par la bague de freinage 130 sur le rotor 110 est donc alternativement positif et négatif lorsque le rotor 110 tourne. Pour une rotation complète du rotor 110, le couple généré par la bague de freinage 130 sur le rotor 110 est en moyenne nul.

Le couple appliqué par la bague de freinage 130 sur le rotor 110 est en outre sinusoïdal en fonction de la position du rotor 110. Ledit couple est maximal lorsque les zones magnétiques 211, 212 du rotor 110 sont décalées de moitié par rapport aux zones magnétiques 201, 202 de la bague de freinage 130, autrement dit lorsqu'une séparation entre deux zones magnétiques 201, 202 de la bague de freinage 130 est située au milieu d'une zone magnétique 211, 212 du rotor 110.

En outre, ledit couple est négligeable par rapport à un couple d'entraînement du rotor 110 dû au champ magnétique induit du stator 120. En revanche, lorsque les bobinages 121 du stator 120 ne sont pas alimentés électriquement, le couple généré par la bague de freinage 130 sur le rotor 110 n'est pas négligeable par rapport aux forces d'inertie qui s'appliquent sur le rotor 110. Dans un tel cas, et lorsque la vitesse du rotor 110 diminue en dessous d'un seuil, le couple négatif généré par la bague de freinage 130 sur le rotor 110 n'est pas compensé par le couple positif. La bague de freinage génère ainsi une force de freinage sur le rotor 110 qui ralentit ledit rotor 110 jusqu'à un arrêt de la rotation.

Lorsque le rotor 110 est à l'arrêt, et si un couple externe, généré par exemple par la masse d'un volet roulant, s'applique sur le rotor 110, la bague de freinage 130 applique un couple de freinage s'opposant audit couple externe. Ainsi, la bague de freinage 130 permet de maintenir le rotor 110 dans une position fixe lorsque le rotor 110 est à l'arrêt.

La bague de freinage 130 génère en outre un effort axial sur le rotor 110 dont le sens et l'intensité varient en fonction de la position en rotation du rotor 110, selon que les zones magnétiques 201, 202 de la bague de freinage 130 sont face à des zones magnétiques 211 de la zone de freinage 112 polarisées dans le même sens, ou face à des zones magnétiques 211 de la zone de freinage 112 polarisées en sens contraire, ou dans une position intermédiaire entre deux zones magnétiques 211, 212 adjacentes de la zone de freinage 112. L'amplitude dudit effort axial appliqué au rotor 110 varie donc en fonction de la position en rotation du rotor 110. En outre, ladite amplitude de l'effort axial appliqué au rotor 110 varie en fonction d'une distance entre le bord latéral 131 de la bague de freinage 130 et le bord latéral 1121 de la zone de freinage 112. La bague de freinage 130 est donc positionnée par rapport à la zone de freinage 112 de sorte à minimiser l'amplitude de l'effort axial appliqué au rotor 110. Dans le mode de réalisation selon la revendication 1, la bague de freinage 130 est positionnée par rapport à la zone de freinage 112 de sorte que l'effort axial maximal appliqué sur le rotor 110 lors d'une rotation complète est inférieur à un seuil prédéfini.

Lorsque le moteur synchrone 100 sans balais est assemblé, l'effort axial maximal appliqué sur le rotor 110 peut être mesuré en fonction d'une distance entre le bord latéral 131 de la bague de freinage 130 et le bord latéral 1121 de la zone de freinage 112, par exemple en déplaçant la bague de freinage selon l'axe de rotation 102, afin d'identifier l'écart prédéfini *d.* Il est ainsi possible de maîtriser le positionnement de la bague de freinage 130 par rapport au rotor 110 pour empêcher ou limiter des vibrations et du bruit liés à la bague de freinage 130.

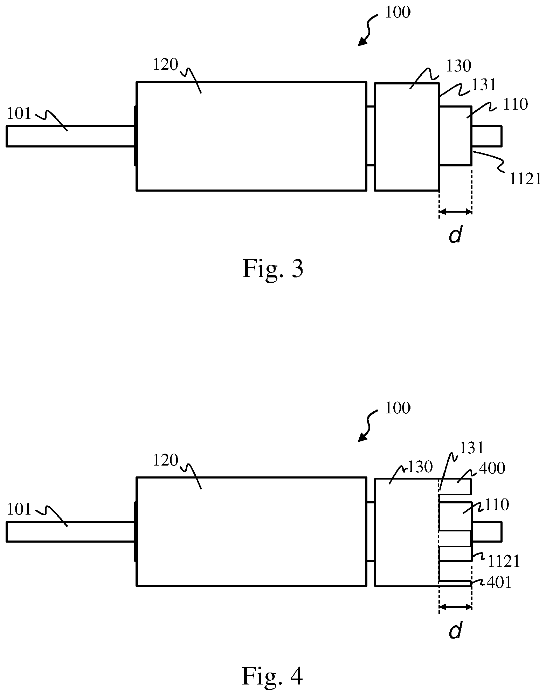

La **Fig. 3** illustre schématiquement en vue de face le moteur synchrone 100 sans balais comportant le dispositif de freinage magnétique selon un premier mode de réalisation.

Le rotor 110 entre en rotation autour de l'arbre 101. Autour du rotor 110 se trouvent, à une extrémité du moteur synchrone 100 sans balais, les bobinages 121 du stator 120, et à l'autre extrémité du moteur synchrone 100 sans balais, la bague de freinage 130. A ladite autre extrémité du moteur synchrone 100 sans balais, la zone de freinage 112 a une longueur supérieure à la longueur de la bague de freinage 130 de telle sorte que le bord latéral 1121 de la zone de freinage 112 dépasse du bord latéral 131 de la bague de freinage 130 de l'écart prédéfini *d*.

La **Fig. 4** illustre schématiquement en vue de face le moteur synchrone 100 sans balais comportant le dispositif de freinage magnétique selon un second mode de réalisation. Dans ledit second mode de réalisation, la bague de freinage 130 comporte en outre des dents 400 situées dans le prolongement latéral de ladite bague de freinage 130. Les dents 400 ont une longueur égale à l'écart prédéfini *d*. Il est ainsi possible d'ajuster le positionnement de la bague de freinage 130 en alignant une extrémité 401 des dents 400 de la bague de freinage 130 avec le bord latéral 1121 de la zone de freinage 112.

Les dents 400 sont en outre démagnétisées, ou faiblement magnétisées par rapport au reste de la bague de freinage 130 de sorte qu'un couplage magnétique entre les dents 400 et le rotor 110 est négligeable par rapport au couplage magnétique entre la bague de freinage 130 et le rotor 110.

## Revendications

1. Dispositif de freinage magnétique d'un moteur synchrone (100) sans balais, le moteur synchrone (100) sans balais comportant un rotor (110) et un stator (120), le stator (120) comportant des bobinages (121) et le rotor (110) comportant une zone moteur (111) et une zone de freinage (112), une alimentation électrique des bobinages (121) pouvant entraîner une rotation du rotor (110) par couplage magnétique avec la zone moteur (111), le dispositif de freinage magnétique comportant :
- la zone de freinage (112) disposée au niveau du rotor (110) dans le prolongement axial de la zone moteur (111), comportant au moins un aimant permanent et un bord latéral (1121), ledit bord latéral (1121) étant le plus éloigné de la zone moteur (111),
- une bague de freinage (130) en forme d'anneau comportant au moins un aimant permanent et un bord latéral (131), ledit bord latéral (131) étant le plus éloigné de la zone moteur (111), une force de freinage sur le rotor (110) étant générée par couplage magnétique entre le au moins un aimant permanent de la bague de freinage (130) et le au moins un aimant permanent de la zone de freinage (112) lorsque les bobinages (121) du stator (120) ne sont pas alimentés électriquement,
le dispositif de freinage magnétique étant **caractérisé en ce que** la bague de freinage (130) est positionnée autour d'au moins une partie de la zone de freinage (112) et positionnée en retrait, dans la direction de la zone moteur, par rapport au bord latéral (1121) de la zone de freinage le plus éloigné de la zone moteur (111), le bord latéral (131) de la bague de freinage (130) le plus éloigné de la zone moteur (111) étant séparé du bord latéral (1121) de la zone de freinage (112) le plus éloigné de la zone moteur (111) par un écart prédéfini (d) correspondant à une distance pour laquelle un effort axial maximal appliqué sur le rotor (10) est inférieur à un seuil prédéfini, l'écart prédéfini (*d*) étant compris entre 1,5 mm et 7 mm.

2. Dispositif de freinage magnétique selon la revendication 1, **caractérisé en ce que** la bague de freinage (130) comporte en outre des dents (400) positionnées sur le bord latéral (131) de la bague de freinage (130) le plus éloigné de la zone moteur (111), les dents (400) ayant une longueur égale à l'écart prédéfini (*d*).

3. Moteur synchrone (100) sans balais comportant le dispositif de freinage magnétique selon l'une quelconque des revendications 1 ou 2.

## Patentansprüche

1. Magnetbremseinrichtung für einen bürstenlosen Synchronmotor (100), wobei der bürstenlose Synchronmotor (100) einen Rotor (110) und einen Stator (120) umfasst, wobei der Stator (120) Wicklungen (121) umfasst und der Rotor (110) einen Motorbereich (111) und einen Bremsbereich (112) umfasst, wobei eine Versorgung der Wicklungen (121) mit Strom eine Drehung des Rotors (110) durch magnetische Kopplung mit dem Motorbereich (111) bewirken kann, wobei die Magnetbremseinrichtung Folgendes umfasst:
- den Bremsbereich (112), der am Rotor (110) in der axialen Verlängerung des Motorbereichs (111) angeordnet ist und mindestens einen Dauermagneten und einen Seitenrand (1121) aufweist, wobei der Seitenrand (1121) am weitesten von dem Motorbereich (111) entfernt ist,
- einen ringförmigen Bremsring (130), der mindestens einen Dauermagneten und einen Seitenrand (131) aufweist, wobei der Seitenrand (131) am weitesten von dem Motorbereich (111) entfernt ist, wobei durch magnetische Kopplung zwischen dem mindestens einen Dauermagneten des Bremsrings (130) und dem mindestens einen Dauermagneten des Bremsbereichs (112) eine Bremskraft auf den Rotor (110) erzeugt wird, wenn die Wicklungen (121) des Stators (120) nicht mit Strom versorgt werden,
wobei die Magnetbremseinrichtung **dadurch gekennzeichnet ist, dass** der Bremsring (130) um mindestens einen Teil des Bremsbereichs (112) positioniert und in Bezug auf den Seitenrand (1121) des Bremsbereichs, der am weitesten von dem Motorbereich (111) entfernt ist, in Richtung des Motorbereichs zurückgezogen positioniert ist, wobei der Seitenrand (131) des Bremsrings (130), der am weitesten von dem Motorbereich (111) entfernt ist, von dem Seitenrand (1121) des Bremsbereichs (112), der am weitesten von dem Motorbereich (111) entfernt ist, um einen vordefinierten Abstand (d) entfernt ist, der einer Entfernung entspricht, bei der eine auf den Rotor (10) ausgeübte maximale Axialkraft kleiner als ein vordefinierter Schwellenwert ist, wobei der vordefinierte Abstand (*d*) zwischen 1,5 mm und 7 mm beträgt.

2. Magnetbremseinrichtung nach Anspruch 1, **dadurch gekennzeichnet, dass** der Bremsring (130) ferner Zähne (400) umfasst, die an dem Seitenrand (131) des Bremsrings (130), der am weitesten von dem Motorbereich (111) entfernt ist, positioniert sind, wobei die Zähne (400) eine Länge aufweisen, die gleich dem vordefinierten Abstand (*d*) ist.

3. Bürstenloser Synchronmotor (100), der die Magnetbremseinrichtung nach einem beliebigen der Ansprüche 1 oder 2 umfasst.

## Claims

1. Magnetic braking device for a brushless synchronous motor (100), the brushless synchronous motor (100) comprising a rotor (110) and a stator (120), the stator (120) comprising windings (121) and the rotor (110) comprising a motor zone (111) and a braking zone (112), a supply of electricity to the coils (121) being able to cause the rotor (110) to rotate as a result of magnetic coupling with the motor zone (111), the magnetic braking device comprising:
- the braking zone (112), located at the rotor (110) in the axial continuation of the motor zone (111), comprising at least one permanent magnet and a lateral edge (1121), said lateral edge (1121) being the furthest from the motor zone (111),
- a braking ring (130) in the form of an annulus comprising at least one permanent magnet and a lateral edge (131), said lateral edge (131) being the furthest from the motor zone (111), a braking force on the rotor (110) being generated as a result of magnetic coupling between the at least one permanent magnet of the braking ring (130) and the at least one permanent magnet of the braking zone (112) when the coils (121) of the stator (120) are not supplied with electricity,
the magnetic braking device being **characterized in that** the braking ring (130) is positioned around at least part of the braking zone (112) and positioned so that it is set back, in the direction of the motor zone, relative to that lateral edge (1121) of the braking zone that is furthest from the motor zone (111), that lateral edge (131) of the braking ring (130) that is furthest from the motor zone (111) being separated from that lateral edge (1121) of the braking zone (112) that is furthest from the motor zone (111) by a predefined separation (*d*) corresponding to a distance for which a maximum axial load applied to the rotor (10) is below a predefined threshold, the predefined separation (d) being comprised between 1.5 mm and 7 mm.

2. Magnetic braking device according to Claim 1, **characterized in that** the braking ring (130) further comprises teeth (400) which are positioned on that lateral edge (131) of the braking ring (130) that is furthest from the motor zone (111), the teeth (400) having a length equal to the predefined separation (d).

3. Brushless synchronous motor (100) comprising the magnetic braking device according to either one of Claims 1 or 2.
